# EUROPÄISCHE PATENTSCHRIFT

(11) **EP 1 133 532 B1**
(45) Veröffentlichungstag und Bekanntmachung des Hinweises auf die Patenterteilung: **24.07.2002**
(21) Anmeldenummer: 99956021.2
(22) Anmeldetag: 20.11.1999
(51) Int. Cl.: C09B 67/00, G01N 21/91, C09B 67/22

(54) **VERWENDUNG VON BISAZOVERBINDUNGEN ENTHALTENDEN ZUSAMMENSETZUNGEN ALS RISSPRÜFMITTEL**
USE OF COMPOSITIONS CONTAINING BISAZO COMPOUNDS FOR DETECTING FISSURES
UTILISATION DE COMPOSITIONS CONTENANT DES COMPOSES BISAZO COMME AGENTS DE DETECTION DE FISSURES

(30) Priorität: 26.11.1998 DE 19854677
(43) Veröffentlichungstag der Anmeldung: 19.09.2001
(73) Patentinhaber: BASF AKTIENGESELLSCHAFT, 67056 Ludwigshafen (DE)
(72) Erfinder: BECK, Karin, Heidrun, D-67067 Ludwigshafen (DE); VAMVAKARIS, Christos, D-67169 Kallstadt (DE); ETZBACH, Karl-Heinz, D-67227 Frankenthal (DE); SCHOLZ, Gerhard, D-67126 Hochdorf-Assenheim (DE); KRÄH, Claudia, D-67112 Mutterstadt (DE)
(86) Internationale Anmeldenummer: EP9908917
(87) Internationale Veröffentlichungsnummer: WO0031188

(56) Entgegenhaltungen:
- DE-A- 2 361 758
- DE-A- 2 413 369
- DE-A- 3 507 174
- US-A- 4 000 985
- US-A- 4 191 048
- US-A- 5 676 708

## Beschreibung

Die vorliegende Erfindung betrifft die Verwendung von Zusammensetzungen, welche als Komponenten enthalten
A) mindestens eine Bisazoverbindung ausgewählt aus der Gruppe bestehend aus den Verbindungen der allgemeinen Formel Ia 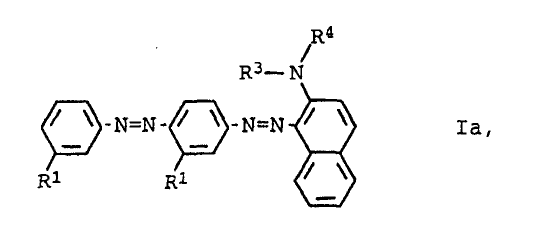 und der allgemeinen Formel Ib 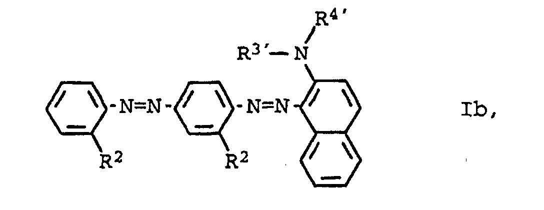 in welchen bedeuten
   - R¹: C₁-C₈-Alkyl,
   - R²: C₂-C₈-Alkyl,
   - R³, R^{3'}: C₂-C₂₁-Alkyl, in welchem bis zu vier CH₂-Gruppen der Kohlenstoffkette durch Sauerstoff in Etherfunktion ersetzt sein können,
   - R⁴: Wasserstoff oder unabhängig von R³ die Bedeutung von R³,
   - R^{4'}: Wasserstoff oder unabhängig von R^{3'} die Bedeutung von R^{3'},
B) mindestens ein Lösungsmittel, in welchem Komponente A) löslich ist und gegebenenfalls
C) mindestens eine oberflächenaktive Substanz,
als Rissprüfmittel zur Detektion von oberflächlichen Rissen oder anderen Defekten in diesbezüglich zu untersuchenden Werkstücken.

Weiter betrifft die Erfindung Zusammensetzungen, welche die oben genannten Komponenten A), B) und C) enthalten.

In der US-Patentschrift 4,191,048 wird ein Verfahren zur Detektion von Rissen und anderen Defekten in Werkstücken beschrieben. Als Rissprüfmittel findet eine Zusammensetzung Verwendung, die eine Lösung eines Isomerengemischs eines roten, bei Tageslicht sichtbaren Bisazofarbstoffes und eine mit dieser Lösung mischbare oberflächenaktive Substanz enthält. Dieses Isomerengemisch des roten Bisazofarbstoffs leitet sich vom (statistisch) methylsubstituierten Aminoazobenzol (als Edukt für die Diazokomponente) und einem C₅-C₁₂-Alkyl-β-naphthol oder Mischungen solcher C₅-C₁₂-Alkyl-β-naphthole (als Kupplungskomponente) ab.

Durch diesen Farbstoff (bzw. das Isomerengemisch dieses Farbstoffs) werden die Risse im zu prüfenden Werkstück zwar deutlich markiert, nachteilig ist jedoch, daß hierbei toxikologisch bedenkliche, isomere Bisazoverbindungen enthalten sind.

In der deutschen Offenlegungsschrift DE-A 35 07 174 wird ein Verfahren zur Dokumentation von Rissprüfungen an Werkstücken beschrieben, gemäß welchem man Farbstoffe oder Farbstoffvorstufen verwendet, welche aus den Rissen des Werkstücks auf ein mit dem Werkstück in Kontakt gebrachtes flächiges Substrat übergehen. Solch ein Substrat ist gemäß dieser Schrift vorzugsweise Papier, welches gegebenenfalls noch mit einer Nehmerschicht versehen sein kann.

Als geeignete Farbstoffe sind Solvent Yellow 56 (C.I. 11021), Solvent Yellow 14 (C.I. 12055), Dispers Red 1 (C.I 11110), Dispers Blue 3 (C.I. 61505) und Solvent Orange 3 (C.I 11270) beschrieben.

Die genannten öllöslichen gelben und orangefarbenen ("Solvent"-) Farbstoffe zeigen auf Grund ihrer hellen Farbe in der Regel einen zu geringen Kontrast zur Farbe des Werkstücks, die genannten Dispersions-("Dispers"-)Farbstoffe sind wiederum im Lösungsmittel des Rissprüfmittels nicht ausreichend löslich, so daß auf Grund der zu geringen Farbstoffkonzentration ein nur unzureichender Kontrast zur Farbe des Werkstücks resultiert.

Aufgabe der vorliegenden Erfindung war es daher, ein Rissprüfmittel zur Verfügung zu stellen, welches eine kontrastreiche Markierung gestattet und dessen Farbstoff(e) nicht auf Aminen der Klasse III A 2 -wie in der TRGK (Technische Regeln für Gefahrstoffe) 614 definiert- basieren.

Diese Aufgabe wurde gelöst durch die Verwendung der eingangs beschriebenen Zusammensetzungen als Rissprüfmittel für die Detektion von oberflächlichen Rissen oder oberflächlichen anderen Defekten in diesbezüglich zu untersuchenden Werkstücken.

Als C₂-C₈-Alkyl für R² kommen sowohl unverzweigte Alkylketten, wie z.B. Ethyl, n-Propyl, i-Propyl, n-Butyl, sec-Butyl, n-Pentyl, Pent-2-yl, Pent-3-yl, n-Hexyl, Hex-2-yl, Hex-3-yl, n-Heptyl, Hept-2-yl, Hept-3-yl, Hept-4-yl, n-Octyl, Oct-2-yl, Oct-3-yl und Oct-4-yl als auch verzweigte Alkylketten, wie z.B, i-Butyl, tert-Butyl, 2-Methylbutyl, 3-Methylbutyl, 2,2-Dimethylpropyl, 1,1-Dimethylpropyl, 1,2-Dimethylpropyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Trimethylpropyl, 1-Ethyl-1-methylpropyl, l-Ethyl-2-methylpropyl und 2-Ethylhexyl in Frage.

Als C₁-C₈-Alkyl für R¹ kommt neben den zuvor genannten Resten zusätzlich noch Methyl in Frage.

Als C₂-C₂₁-Alkyl für R³ und R⁴ bzw. R^{3'} und R^{4'} kommen jeweils unabhängig voneinander neben den bereits unter R² beispielhaft genannten unverzweigten oder verzweigten C₂-C₈-Alkylresten sowohl die unverzweigten C₉-C₂₁-Alkylreste, wie z.B. n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl oder n-Heneicosyl sowie die entsprechenden, hinsichtlich ihrer Anbindung (yl-Position) isomeren Reste als auch die entsprechenden verzweigten C₉-C₂₁-Alkylreste in Frage.

Für R³ und R⁴ bzw. R^{3'} und R^{4'} kommen als C₂-C₂₁-Alkyl, in welchem bis zu vier CH₂-Gruppen der Kohlenstoffkette durch Sauerstoff in Etherfunktion ersetzt sein können, in Frage, z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl, 3,6,9,12-Tetraoxatetradecyl.

Weiter kommen als solche Reste Oligopropylenglykol-Gruppierungen in Frage, welche sich durch Addition von ein, zwei, drei oder vier Propylenoxid-Molekülen je Aminogruppe des Naphthylamins ableiten, sowie deren Methyl- oder Ethyl-Ether.

Solche Reste entsprechen beispielsweise den Formeln - (O-CH₂-CH₂(CH₃)-)ₙ-OR oder -(O-CH₂(CH₃)-CH₂-)ₙ-OR, in welchen n Werte von 1, 2, 3 oder 4 annimmt und R Wasserstoff, Methyl oder Ethyl bedeutet.

Bevorzugt finden Zusammensetzungen Verwendung, in welchen R¹ und R² für die bereits oben beispielhaft mit aufgeführten C₁-C₄- bzw. C₂-C₄-Alkylreste steht.

Als C₂-C₂₁-Alkyl für R⁴ und/oder R³ bzw. R^{4'} und/oder R^{3'} sind insbesondere 2-Ethylhexyl und unverzweigtes oder verzweigtes Tridecyl zu nennen.

Besonders bevorzugt finden Zusammensetzungen Verwendung, in welchen Komponente A) aus mindestens einer Bisazoverbindung der Formel Ia besteht. Die bereits vorher genannten Bevorzugungen beziehen sich auch auf die hier genannte besonders bevorzugt zu verwendenende Zusammensetzung.

Die Herstellung der Bisazoverbindungen der Formeln Ia und Ib erfolgt üblicherweise in zwei Reaktionsschritten. Durch Azokupplung der aus dem meta-R¹-Aminobenzol ((K₁)) bzw. ortho-R²-Aminobenzol ((K₂)) erhaltenen Diazoverbindung mit einem weiteren Molekül des entsprechenden Amins wird im ersten Schritt das substituierte Azobenzol ("Di-(K₁)" bzw. "Di-(K₂)") erhalten. Dieses wird wiederum diazotiert und im zweiten Schritt mit einem Molekül des R³,R⁴- bzw. R^{3'},R^{4'}-(di)substituierten Naphthylamins (Kupplungskomponente (K₃) bzw. (K₃')) zur entsprechenden Zielverbindung der Formel Ia bzw. Ib umgesetzt. Das nachfolgende Reaktionsschema verdeutlicht dies nochmals beispielhaft für die Herstellung von Bisazoverbindungen der Formel Ia.

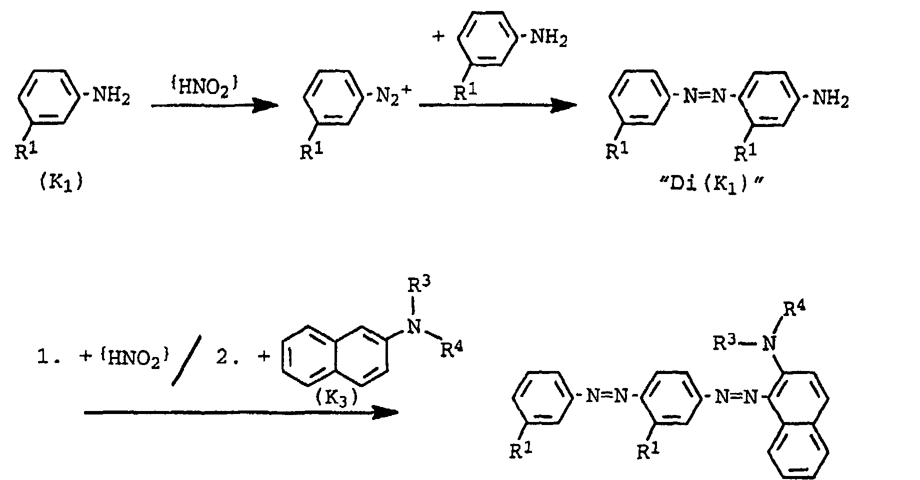

Sinngemäß gilt dieses Schema ganz analog für die Herstellung der Verbindungen der Formel Ib.

Die Herstellung solcher erfindungsgemäß zu verwendenenden Verbindungen erfolgt z.B. in Anlehnung an die Ausführungen in der Auslegeschrift DE 24 13 369 B2 und der Offenlegungsschrift DT 23 61 758 A1 und stellt daher für den Fachmann kein Problem dar.

Bei den Alkylresten R¹ bzw. R² der aromatischen Amin-Komponenten (K₁) bzw. (K₂) handelt es sich meist um definierte Reste, d.h. die Amin-Komponenten (K₁) bzw. (K₂) sind in der Regel Reinverbindungen.

Die Reste R³ und/oder R⁴ bzw. R^{3'} und/oder R^{4'} der Kupplungskomponente (K₃) bzw. (K3') bezeichnen jedoch, gerade im Falle von höheren Alkylresten, in welchen noch bis zu vier CH₂-Gruppen der Kohlenstoffkette durch Sauerstoff in Etherfunktion ersetzt sein können, oftmals Mischungen mehrerer isomerer Alkylreste, so daß die (di)substituierten Naphthylamine (K₃) bzw. (K₃') im gegebenen Fall stellvertretend für Isomerengemische im Hinblick auf diese Reste stehen.

Dies ist meist auf die Herstellung solcher (di)substituierten Naphthylamine zurückzuführen, da diese üblicherweise ausgehend von Naphthylamin und Reaktanten, welche Isomerengemische solcher Alkylreste enthalten, hergestellt werden. Als solche Reaktanten werden in der Regel Isomerengemische von Alkylhalogeniden oder auch von Epoxiden verwendet.

In diesem Sinne stehen die Formeln Ia und Ib im gegebenen Fall auch für Isomerengemische von Bisazoverbindungen im Hinblick auf die Reste R³ und/oder R⁴ bzw. R³' und/oder R⁴'.

Weiter fallen die oben angeführten Amin-Komponenten (K₁) bzw. (K₂) und die erfindungsgemäß zu verwendenden Bisazoverbindungen nicht unter die TRGS 614 und unterliegen daher nicht den darin genannten Einsatzbeschränkungen. Auf diesen Aspekt wurde bereits eingangs eingegangen.

Als Lösungsmittel (Komponente B)) für die Komponente A) kommen in Frage:
C₁-C₄-Alkohole, wie z.B. Methanol, Ethanol, n-Propanol, Isopropanol, Butanol, Isobutanol, sec-Butanol sowie insbesondere die C₅-C₁₂-Alkohole n-Pentanol, n-Hexanol, n-Heptanol, n-Octanol, n-Nonanol, n-Decanol, n-Undecanol und n-Dodecanol und deren Isomere,
Glykole, wie z.B. 1,2-Ethylenglykol, 1,2- oder 1,3-Propylenglykol, 1,2-, 2,3- oder 1,4-Butylenglykol, Di- oder Triethylenglykol oder Di- oder Tripropylenglykol,
Ether, wie z.B. Methyl-tert-butylether, 1,2-Ethylenglykolmonooder -dimethylether, 1,2-Ethylenglykolmono- oder -diethylether, 3-Methoxypropanol, 3-Isopropoxypropanol, Tetrahydrofuran oder Dioxan,
Ketone, wie z.B. Aceton, Methylethylketon, Methylisobutylketon oder Diacetonalkohol (4-Hydroxy-4-methyl-2-pentanon),
C₁-C₅-Alkylester, wie z.B. Essigsäuremethylester, Essigsäureethylester, Essigsäurepropylester, Essigsäurebutylester oder Essigsäureamylester,
aliphatische oder aromatische Kohlenwasserstoffe wie z.B. Pentan, Hexan, Heptan, Octan, Isooctan, Petrolether, Toluol, Xylol, Ethylbenzol, Tetralin, Dekalin, Dimethylnaphthalin, Testbenzin, Shellsol® oder Solvesso®
Mineralöle, wie z.B. Benzin, Kerosin, Dieselöl oder Heizöl,
aber auch natürliche Öle, wie z.B. Olivenöl, Sojaöl, Rapsöl oder Sonnenblumenöl.

Selbstverständlich kommen auch Mischungen dieser Lösungsmittel als Komponente B) in Betracht.

Die erfindungsgemäß als Rissprüfmittel zu verwendenden Zusammensetzungen können zusätzlich noch oberflächenaktive Substanzen (Komponente C)) enthalten.

Diese Substanzen können sowohl kationische, anionische, nichtionische als auch zwitterionische Verbindungen oder Mischungen solcher Verbindungen sein.

Man kann hierbei z.B. - ohne daß durch die Reihenfolge der nachfolgenden Aufführung eine Zuordnung zu einer dieser Klassen beabsichtigt ist - Polycarboxylate und Copolymerisate, die unter den Markennamen Sokalan® oder Elvacite®, oder auch sogenannte "Hyperdispersants", die unter dem Namen Solsperse®, vertrieben werden, weiterhin Formaldehyd-Kondensate auf Basis aromatischer Sulfonate oder alkylaromatische Sulfonate, die unter den Markennamen Tamol® und Nekal® sowie Supragil® und Rhodacar® erhältlich sind, zugeben.

### Weiter lassen sich beispielsweise auch verwenden

Alkoxylierungsprodukte, die auf aliphatischen oder alkylaromatischen Hydroxy-, Amino- und Aminohydroxyverbindungen basieren, und unter den Markennamen Synperonic® und Ukanil®, Dehypon®, Neopol®-Ethoxylate, Emulan®, Lutensol®, Plurafac® und Pluronic® oder Elfapur® kommerziell erhältlich sind,
Polyalkylenglykole, bekannt unter den Markennamen Pluriol® und Antarox®, und deren Alkylether,
aliphatische und alkylaromatische Ein- und Mehrfachsulfonate mit den Markennamen Lutensit®, Rhodacar®, Rhodapon® und Teepol®,
Säureester und -Amide wie z. B. Sulfobernsteinsäureester der Marke Elfanol®,
Phosporsäurepartialester, die unter den Namen Rhodafac® oder auch Marlophor® vertrieben werden,
Fettsäurepartialglyceride sowie Fettsäurealkanolamide, die unter den Markennamen Luwitor® bzw. Marlamid® zu erhalten sind,
sowie die unter den Namen Plantaren® und Glucopon® angebotenen Tenside.

Ferner können auch oberflächenaktive Substanzen mit Betain- oder Sultain-Gruppierungen Einsatz finden, welche innere Salze aus quartären Ammonium- und Carboxylat-(Betain) bzw. Sulfonat-(Sultain)-Ionen sind und z. B. unter den Markennamen Mackam® erhältlich sind. Weiterhin können auch kationische oberflächenaktive Substanzen auf Basis quartärer Ammoniumverbindungen und Aminoxide Einsatz finden, wie sie etwa unter den Namen Alkaquat® und Rhodaquat® sowie Mackalene®, Mackernium®, Mackpro® und Mackamine® angeboten werden.

Für den Fall, daß der Zusatz oberflächenaktiver Substanzen (Komponente C)) zu den Zusammensetzungen erwünscht ist, gibt man vorzugsweise nichtionische oder anionische Tenside zu. In Frage kommen hier vor allem Alkoxylierungsprodukte basierend auf aliphatischen oder alkylaromatischen Hydroxy-, Amino- und Aminohydroxyverbindungen, Polyalkylenglykole und deren Alkylether sowie Formaldehyd-Kondensate auf Basis aromatischer Sulfonate oder alkylaromatische Sulfonate.

Ein weiterer Gegenstand der vorliegenden Erfindung sind Zusammensetzungen, welche als Komponenten enthalten
A) mindestens eine Bisazoverbindung ausgewählt aus der Gruppe bestehend aus den eingangs erwähnten Verbindungen der Formeln Ia und Ib,
B) mindestens ein Lösungsmittel, in welchem Komponente A) löslich ist und
C) mindestens eine oberflächenaktive Substanz.

Bevorzugt enthalten diese Zusammensetzungen Bisazoverbindungen der Formeln Ia und Ib, in welchen R¹ C₁-C₄-Alkyl und R² C₂-C₄-Alkyl bedeutet. Diese bevorzugten Alkylreste wurden bereits weiter oben exemplarisch aufgeführt.

Besonders bevorzugt sind Zusammensetzungen, in welchen die Komponente A) aus mindestens einer Bisazoverbindungen der Formel Ia besteht. Die bereits vorher genannten Bevorzugungen beziehen sich auch auf die hier genannte besonders bevorzugte Zusammensetzung.

Beispiele für Lösungsmittel (Komponente B)) in den erfindungsgemäßen Zusammensetzungen wurden bereits weiter oben exemplarisch aufgeführt.

Beispiele für oberflächenaktive Substanzen (Komponente C)) in den erfindungsgemäßen Zusammensetzungen wurden ebenfalls bereits weiter oben exemplarisch aufgeführt.

Bevorzugt sind Zusammensetzungen, in welchen die Komponente C) aus mindestens einer nichtionischen oder anionischen oberflächenaktiven Substanz besteht. Insbesondere handelt es sich bei den nichtionischen oberflächenaktiven Substanz um

Alkoxylierungsprodukte, die auf aliphatischen oder alkylaromatischen Hydroxy-, Amin- und Aminohydroxyverbindungen basieren, und unter den Markennamen Synperonic® und Ukanil®, Dehypon®, Neopol®-Ethoxylate, Emulan®, Lutensol®, Plurafac® und Pluronic® oder Elfapur® kommerziell erhältlich sind,
Polyalkylenglykole und deren Alkylether bekannt unter den Markennamen Pluriol® und Antarox®,
Säureester und -Amide, wie z. B. Sulfobernsteinsäureester der Marke Elfanol®,
Fettsäurepartialglyceride sowie Fettsäurealkanolamide, die unter den Markennamen Luwitor® bzw. Marlamid® zu beziehen sind,
sowie die unter den Namen Plantaren® und Glucopon® angebotenen Produkte.

Bei den anionischen oberflächenaktiven Substanz handelt es sich insbesondere um Formaldehyd-Kondensate auf Basis aromatischer Sulfonate oder um alkylaromatische Sulfonate, die unter den Markennamen Tamol® und Nekal® sowie Supragil® und Rhodacar® erhältlich sind.

Die weiter oben beschriebenen Bevorzugungen hinsichtlich der Bisazoverbindungen und deren bevorzugten Substituenten gelten ebenfalls für solche bevorzugten (nichtionische oder anionische oberflächenaktive Substanzen enthaltende) Zusammensetzungen.

Besonders bevorzugt sind Zusammensetzungen und deren bevorzugte Ausführungsformen, in welchen die Komponente C) aus dem Alkoxylierungsprodukt oder einer Mischung von Alkoxylierungsprodukten aliphatischer oder alkylaromatischer Hydroxy-, Amino- oder Hydroxyaminoverbindungen besteht.

Üblicherweise basieren diese Alkoxylierungsprodukte auf Ethylenoxid, Propylenoxid oder Mischungen dieser Alkylenoxide als Alkoxylierungsmittel. Die aliphatischen oder alkylaromatischen Hydroxy-, Amino- oder Hydroxyaminoverbindungen bilden die "Kopfeinheit", an deren Hydroxy-, Amino- oder Hydroxyamino-Funktionalitäten die Oligomerisierung/Polymerisierung ("Schwanz") des Ethylenoxids, Propylenoxids oder der Mischungen dieser Alkylenoxide beginnt. Darüber hinaus können freie Hydroxygruppen mit Alkylgruppen verethert sein.

Die "Kopfeinheiten" sind üblicherweise Fettalkohole (lineare, gesättigte oder ungesättigte primäre C₆-C₂₂-Alkohole), Oligosaccharide, Alkylphenole, Fettamine (lineare, gesättigte oder ungesättigte meist primäre C₆-C₂₂-Amine) sowie niedermolekulare Additionsprodukte aus einfachen oder mehrfachen Aminen und Alkylenoxiden (Hydroxyamine).

Unter den Fettalkohol- und Alkylphenolalkoxylaten seien beispielsweise die unter den Markennamen Lutensol®, Plurafac® und Pluronic® kommerziell verfügbaren Produkte genannt. Weiter sei hier auch ausdrücklich Bezug genommen auf die nichtionischen oberflächenaktiven Substanzen mit vergleichbarem Chemismus, welche in der US-Patentschrift 4,191,048 in der Textpassage beginnend mit Spalte 4, Zeile 52 und endend mit Spalte 8, Zeile 30 beschrieben werden und welche hier als durch Referenz inkorporiert gelten sollen.

Besonders bevorzugt sind auch Zusammensetzungen und deren bevorzugte Ausführungsformen, in welchen die Komponente C) aus einem Polyalkylenglykol, einem Polyalkylenglykolalkylether oder einer Mischung von Polyalkylenglykolen oder/und Polyalkylenglykolalkylethern untereinander oder miteinander besteht.

Beispielsweise seien hier die unter den Markennamen Pluriol® und Antarox® kommerziell verfügbaren Polyalkylenglykole genannt.

Die erfindungsgemäß zu verwendenden Zusammensetzungen enthalten Komponente A) in einem Anteil von 0,10 bis 25,0 Gew.-%, vorzugsweise in einem Anteil von 1,0 bis 10,0 Gew.-% und dementsprechend Komponente B) in einem Anteil von 75,0 bis 99,90 Gew.-%, vorzugsweise in einem Anteil von 90,0 bis 99,0 Gew.-% bezogen auf die Gesamtmenge von Komponente A) und Komponente B).

Ist Komponente C) zugegen, so beträgt ihr Anteil 1,0 bis 15,0 Gew.-%, vorzugsweise 2,0 bis 5,0 Gew.-% an der Gesamtmenge aus den Komponenten A), B) und C). Die Gesamtmenge der Komponenten A) und B) ergänzt sich zu 100 Gew.-% und beträgt dementsprechend 85,0 bis 99,0 Gew.-%, vorzugsweise 98,0 bis 95,0 Gew.-%. Das Verhältnis von Komponente A) zu Komponente B) leitet sich aus den bereits vorher gemachten Angaben ab.

Komponente C) ist in den erfindungsgemäßen Zusammensetzungen in einem Anteil von 1,0 bis 15,0 Gew.-%, vorzugsweise 2,0 bis 5,0 Gew.-%, bezogen auf die Gesamtmenge der Komponenten A), B) und C), enthalten. Die Gesamtmenge der Komponenten A) und B) ergänzt sich zu 100 Gew.-% und beträgt dementsprechend 85,0 bis 99,0 Gew.-%, vorzugsweise 98,0 bis 95,0 Gew.-%. Das Verhältnis der Komponenten A) und B) zueinander ergibt sich wiederum entsprechend den vorher gemachten Angaben.

Die Vorgehensweisen bei der Anwendung von Rissprüfmitteln sind dem Fachmann geläufig und z.B. in der DIN 54 152, der deutschen Offenlegungsschrift DE-A 35 07 174 und in der US-Patentschrift 4,191,048 ausführlich beschrieben, so daß hier nicht weiter darauf eingegangen werden muß.

### Beispiele: Farbstoffe

Folgende Farbstoffe wurden nach üblichen Methoden synthetisiert:

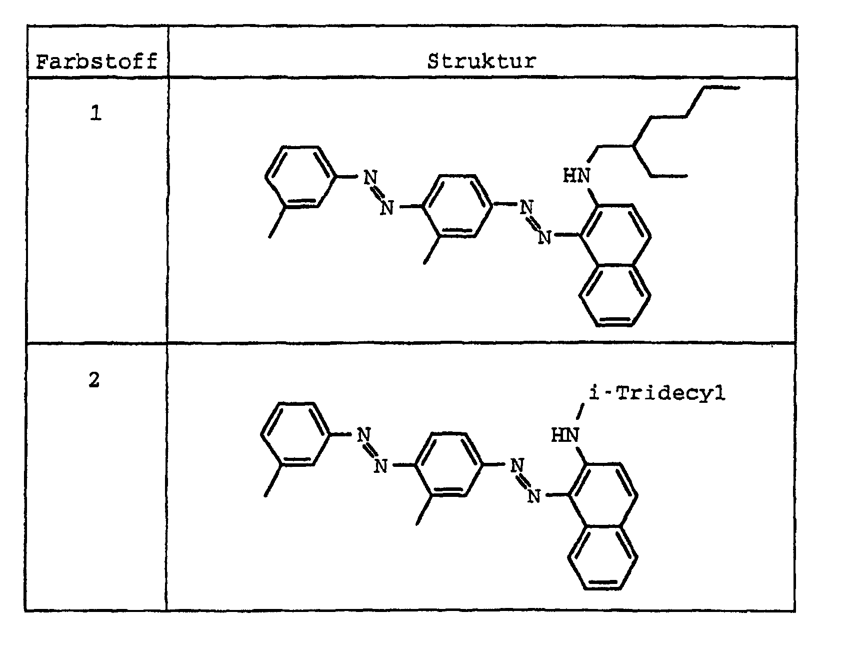

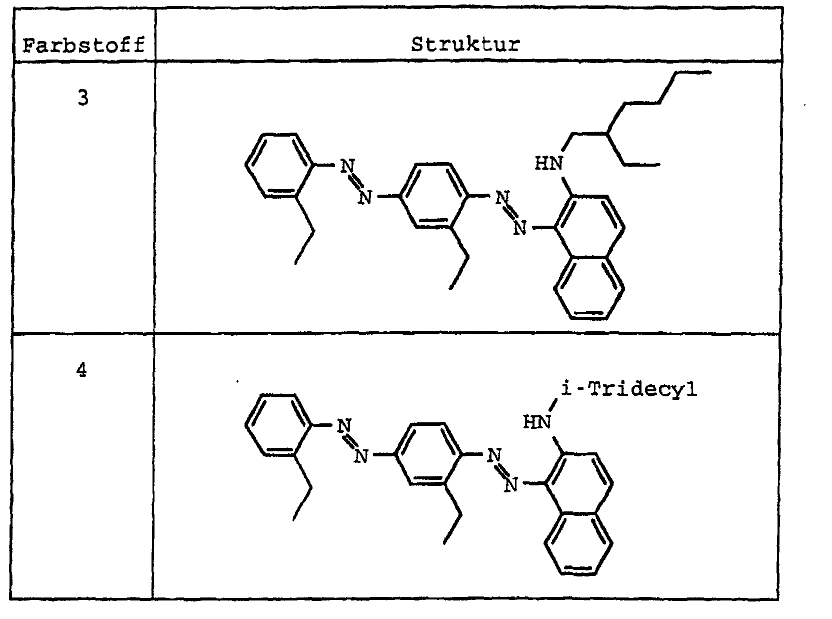

In den Farbstoffen der Beispiele 2 und 4 ist unter dem Rest "i-Tridecyl" eine Mischung der isomeren C₁₃H₂₇-Reste zu verstehen.

### Beispiele: Zusammensetzungen

In der folgenden Tabelle sind Beispiele von Zusamensetzungen, die als Rißprüfmittel gut geeignet sind, zusammengestellt. Sie werden durch Mischen der Einzelkomponenten erhalten. Die Prozentangaben verstehen sich als Gew.-%. Shellsol® AB ist ein hochsiedendes Aromatengemisch (kommerziell erhältlich von der Fa. Shell).

| Beispiel | Zusammensetzung | |
|---|---|---|
| 1 | 3 % | Farbstoff 1 |
| | 97 % | Shellsol® AB |
| 2 | 15 % | Farbstoff 1 |
| | 85 % | Shellsol® AB |
| 3 | 1 % | Farbstoff 1 |
| | 99 % | Xylol |
| 4 | 5 % | Farbstoff 1 |
| | 95 % | Toluol |
| 5 | 2 % | Farbstoff 1 |
| | 98 % | Testbenzin |
| 6 | 1 % | Farbstoff 1 |
| | 99 % | Heptan |
| 7 | 2.5 % | Farbstoff 1 |
| | 97.5 % | Dieselöl |
| 8 | 2.5 % | Farbstoff 1 |
| | 97.5 % | Heizöl |
| 9 | 0.1 % | Farbstoff 1 |
| | 99.9 % | Essigsäureethylester |
| 10 | 1.5 % | Farbstoff 1 |
| | 98.5 % | Butanol |
| 11 | 1.5 % | Farbstoff 1 |
| | 98.5 % | Pentanol |
| 12 | 1 % | Farbstoff 1 |
| | 99 % | 1,2-Ethylenglykol |
| 13 | 1 % | Farbstoff 1 |
| | 99 % | 1,2-Propylenglykol |
| 14 | 1 % | Farbstoff 1 |
| | 99 % | Aceton |
| 15 | 3 % | Farbstoff 1 |
| | 15 % | Shellsol® AB |
| | 82 % | Essigsäureethylester |
| 16 | 3 % | Farbstoff 1 |
| | 15 % | Shellsol® AB |
| | 82 % | 1,2-Propylenglykol |
| 17 | 3 % | Farbstoff 1 |
| | 15 % | Shellsol® AB |
| | 82 % | Aceton |
| 18 | 5 % | Farbstoff 1 |
| | 90 % | Shellsol® AB |
| | 5 % | Tamol® NLP |
| 19 | 8 % | Farbstoff 1 |
| | 90 % | Shellsol® AB |
| | 2 % | Emulan® A |
| 20 | 10 % | Farbstoff |
| | 85 % | Shellsol® AB |
| | 5 % | Nekal® BX |
| 21 | 3 % | Farbstoff 1 |
| | 15 % | Shellsol® AB |
| | 80 % | 1,2-Propylenglykol |
| | 2 % | Nekal® BX |
| 22 | 3 % | Farbstoff 1 |
| | 15 % | Shellsol® AB |
| | 80 % | Aceton |
| | 2 % | Nekal® BX |
| 23 | 1 % | Farbstoff 2 |
| | 99 % | Xylol |
| 24 | 5 % | Farbstoff 2 |
| | 95 % | Xylol |
| 25 | 15 % | Farbstoff 2 |
| | 85 % | Xylol |
| 26 | 25 % | Farbstoff 2 |
| | 75 % | Xylol |
| 27 | 5 % | Farbstoff 2 |
| | 95 % | Shellsol® AB |
| 28 | 5 % | Farbstoff 2 |
| | 93 % | Shellsol® AB |
| | 2 % | Nekal® BX |
| 29 | 5 % | Farbstoff 2 |
| | 93 % | Essigsäureethylester |
| | 2 % | Nekal® BX |
| 30 | 5 % | Farbstoff 2 |
| | 28 % | Shellsol® AB |
| | 65 % | Essigsäureethylester |
| | 2 % | Nekal® BX |
| 31 | 1 % | Farbstoff 3 |
| | 99 % | Shellsol® AB |
| 32 | 2 % | Farbstoff 3 |
| | 98 % | Shellsol® AB |
| 33 | 5 % | Farbstoff 3 |
| | 95 % | Shellsol® AB |
| 34 | 5 % | Farbstoff 3 |
| | 93 % | Shellsol® AB |
| | 2 % | Nekal® BX |
| 35 | 5 % | Farbstoff 3 |
| | 28 % | Shellsol® AB |
| | 65 % | Essigsäureethylester |
| | 2 % | Nekal® BX |
| 36 | 1 % | Farbstoff 4 |
| | 99 % | Shellsol® AB |
| 37 | 2 % | Farbstoff 4 |
| | 98 % | Shellsol® AB |
| 38 | 5 % | Farbstoff 4 |
| | 95 % | Shellsol® AB |
| 39 | 5 % | Farbstoff 3 |
| | 93 % | Shellsol® AB |
| | 2 % | Nekal® BX |
| 40 | 5 % | Farbstoff 3 |
| | 28 % | Shellsol® AB |
| | 65 % | Essigsäureethylester |
| | 2 % | Nekal® BX |
| 41 | 1 % | Farbstoff 1 |
| | 1 % | Farbstoff 2 |
| | 98 % | Xylol |
| 42 | 3 % | Farbstoff 1 |
| | 1 % | Farbstoff 2 |
| | 96 % | Xylol |
| 43 | 3 % | Farbstoff 1 |
| | 1 % | Farbstoff 2 |
| | 96 % | Shellsol® AB |
| 44 | 2.5 % | Farbstoff 1 |
| | 2.5 % | Farbstoff 2 |
| | 28 % | Shellsol® AB |
| | 65 % | Essigsäureethylester |
| | 2 % | Nekal® BX |
| 45 | 2.5 % | Farbstoff 1 |
| | 2.5 % | Farbstoff 2 |
| | 28 % | Shellsol® AB |
| | 67 % | 1,2-Propylenglykol |
| 46 | 2.5 % | Farbstoff 1 |
| | 2.5 % | Farbstoff 2 |
| | 28 % | Shellsol® AB |
| | 65 % | 1,2-Propylenglykol |
| | 2 % | Nekal® BX |
| 47 | 1 % | Farbstoff 3 |
| | 1 % | Farbstoff 4 |
| | 98 % | Xylol |
| 48 | 3 % | Farbstoff 3 |
| | 1 % | Farbstoff 4 |
| | 96 % | Xylol |
| 49 | 3 % | Farbstoff 3 |
| | 1 % | Farbstoff 4 |
| | 96 % | Shellsol® AB |
| 50 | 2.5 % | Farbstoff 3 |
| | 2.5 % | Farbstoff 4 |
| | 28 % | Shellsol® AB |
| | 65 % | Essigsäureethylester |
| | 2 % | Nekal® BX |
| 51 | 2.5 % | Farbstoff 3 |
| | 2.5 % | Farbstoff 4 |
| | 28 % | Shellsol® AB |
| | 67 % | 1,2-Propylenglykol |
| 52 | 2.5 % | Farbstoff 3 |
| | 2.5 % | Farbstoff 4 |
| | 28 % | Shellsol® AB |
| | 65 % | 1,2-Propylenglykol |
| | 2 % | Nekal® BX |
| 53 | 1 % | Farbstoff 1 |
| | 1 % | Farbstoff 2 |
| | 1 % | Farbstoff 3 |
| | 1 % | Farbstoff 4 |
| | 96 % | Shellsol® AB |
| 54 | 1 % | Farbstoff 1 |
| | 1 % | Farbstoff 2 |
| | 1 % | Farbstoff 3 |
| | 1 % | Farbstoff 4 |
| | 36 % | Shellsol® AB |
| | 60 % | Essigsäureethylester |
| 55 | 1 % | Farbstoff 1 |
| | 1 % | Farbstoff 2 |
| | 1 % | Farbstoff 3 |
| | 1 % | Farbstoff 4 |
| | 36 % | Shellsol® AB |
| | 60 % | 1,2-Propylenglykol |
| 56 | 1 % | Farbstoff 1 |
| | 1 % | Farbstoff 2 |
| | 1 % | Farbstoff 3 |
| | 1 % | Farbstoff 4 |
| | 36 % | Shellsol® AB |
| | 58 % | 1,2-Propylenglykol |
| | 2 % | Nekal® BX |

## Patentansprüche

1. Verwendung von Zusammensetzungen, enthaltend als Komponenten
A) mindestens eine Bisazoverbindung ausgewählt aus der Gruppe bestehend aus den Verbindungen der allgemeinen Formel Ia 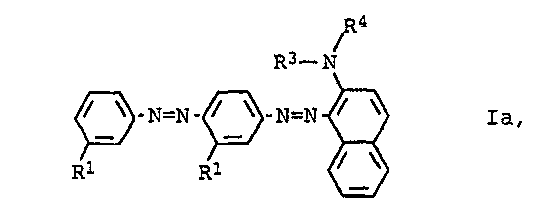 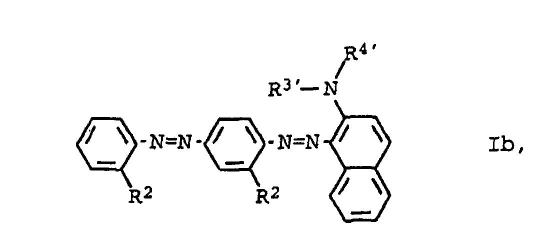 in welchen bedeuten
R¹ C₁-C₈-Alkyl,
R² C₂-C₈-Alkyl,
R³, R^{3'} C₂-C₂₁-Alkyl, in welchem bis zu vier CH₂-Gruppen der Kohlenstoffkette durch Sauerstoff in Etherfunktion ersetzt sein können,
R⁴ Wasserstoff oder unabhängig von R³ die Bedeutung von R³,
R^{4'} Wasserstoff oder unabhängig von R^{3'} die Bedeutung von R^{3'},
B) mindestens ein Lösungsmittel, in welchem Komponente A) löslich ist und gegebenenfalls
C) mindestens eine oberflächenaktive Substanz,
als Rissprüfmittel zur Detektion von oberflächlichen Rissen oder anderen Defekten in diesbezüglich zu untersuchenden Werkstücken.

2. Verwendung von Zusammensetzungen nach Anspruch 1, in welchen R¹ in den Bisazoverbindungen der Formeln Ia C₁-C₄-Alkyl und R² in den Bisazoverbindungen der Formeln Ib C₂-C₄-Alkyl bedeutet.

3. Verwendung von Zusammensetzungen nach Anspuch 1 oder 2, in welchen Komponente A) aus mindestens einer Bisazoverbindung der Formel Ia besteht.

4. Verwendung von Zusammensetzungen nach den Ansprüchen 1 bis 3, in welchen die gegebenenfalls vorhandene Komponente C) aus mindestens einer nichtionischen oder anionischen oberflächenaktiven Substanz besteht.

5. Zusammensetzungen, enthaltend als Komponenten
A) mindestens eine Bisazoverbindung ausgewählt aus der Gruppe bestehend aus den Verbindungen der Formeln Ia und Ib gemäß Anspruch 1,
B) mindestens ein Lösungsmittel, in welchem Komponente A) löslich ist und
C) mindestens eine oberflächenaktive Substanz.

6. Zusammensetzungen nach Anspruch 6, in welchen R¹ in den Bisazoverbindungen der Formel Ia C₁-C₄-Alkyl und R² in den Bisazoverbindungen der Formeln Ib C₂-C₄-Alkyl bedeutet.

7. Zusammensetzungen nach Anspruch 5 oder 6, in welchen die Komponente A) aus mindestens einer Bisazoverbindung der Formel Ia besteht.

8. Zusammensetzungen nach den Ansprüchen 5 bis 7, in welchen die Komponente C) aus mindestens einer nichtionischen oder anionischen oberflächenaktiven Substanz besteht.

9. Zusammensetzungen nach den Ansprüchen 5 bis 7, in welchen die Komponente C) aus dem Alkoxylierungsprodukt oder einer Mischung von Alkoxylierungsprodukten aliphatischer oder alkylaromatischer Hydroxy-, Amino- oder Aminohydroxyverbindungen besteht.

10. Zusammensetzungen nach den Ansprüchen 5 bis 7, in welchen die ( Komponente C) aus einem Polyalkylenglykol, einem Polyalkylenglykolalkylether oder einer Mischung von Polyalkylenglykolen oder/und Polyalkylenglykolalkylethern untereinander oder miteinander besteht.

## Claims

1. Use of compositions comprising as components
A) at least one bisazo compound selected from the group consisting of the compounds of the general formula Ia 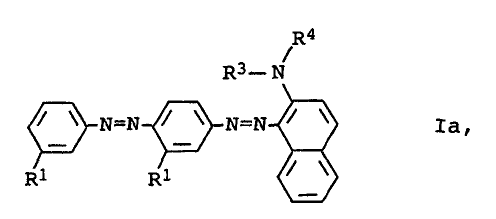 and of the general formula Ib 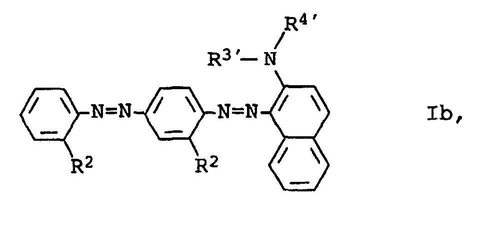 where
R¹ is C₁-C₈-alkyl,
R² is C₂-C₈-alkyl,
R³ and R^{3'} are each C₂-C₂₁-alkyl in which up to four CH₂ groups of the carbon chain may be replaced by oxygen in ether function,
R⁴ is hydrogen or is R³ (independently of R³),
R^{4'} is hydrogen or is R^{3'} (independently of R^{3'}),
B) at least one solvent in which said component A) is soluble, and optionally
C) at least one surface-active substance,
as dye penetrants for detecting surface cracks or other defects in workpieces to be tested in this respect.

2. Use as claimed in claim 1, wherein R¹ is C₁-C₄-alkyl in the bisazo compounds of the formulae Ia and R² is C₂-C₄-alkyl in the bisazo compounds of the formulae Ib.

3. Use as claimed in claim 1 or 2, wherein said component A) comprises at least one bisazo compound of the formula Ia.

4. Use as claimed in any of claims 1 to 3, wherein said optional component C) comprises at least one nonionic or anionic surface-active substance.

5. Compositions comprising as components
A) at least one bisazo compound selected from the group consisting of the compounds of the formulae Ia and Ib as set forth in claim 1,
B) at least one solvent in which said component A) is soluble, and
C) at least one surface-active substance.

6. Compositions as claimed in claim 6, wherein R¹ is C₁-C₄-alkyl in the bisazo compounds of the formula Ia and R² is C₂-C₄-alkyl in the bisazo compounds of the formulae Ib.

7. Compositions as claimed in claim 5 or 6, wherein said component A) comprises at least one bisazo compound of the formula Ia.

8. Compositions as claimed in any of claims 5 to 7, wherein said component C) comprises at least one nonionic or anionic surface-active substance.

9. Compositions as claimed in any of claims 5 to 7, wherein said component C) comprises the alkoxylation product, or a mixture of alkoxylation products, of aliphatic or alkylaromatic hydroxy, amino or aminohydroxy compounds.

10. Compositions as claimed in any of claims 5 to 7, wherein said component C) comprises a polyalkylene glycol, a polyalkylene glycol alkyl ether or a mixture of polyalkylene glycols or/and polyalkylene glycol alkyl ethers between or with each or one another.

## Revendications

1. Utilisation de compositions contenant, en tant que composants
A) au moins un composé bisazoïque choisi dans l'ensemble comprenant les composés de formule générale Ia 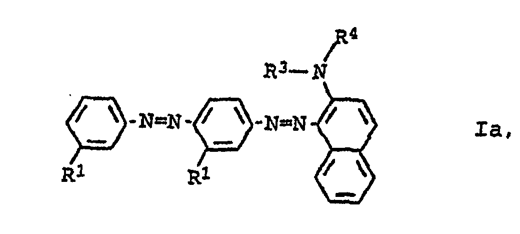 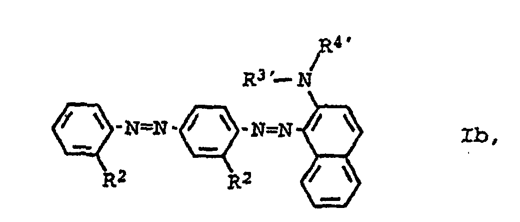 dans laquelle
R¹ est un groupe alkyle en C₁-C₈,
R² est un groupe alkyle en C₂-C₈,
R³, R^{3'} sont des groupes alkyle en C₂-C₂₁ dans lesquels jusqu'à quatre groupes CH₂ de la chaîne hydrocarbonée peuvent être remplacés par des atomes d'oxygène en fonction éther,
R⁴ est un atome d'hydrogène ou encore, indépendamment de R³, a les significations de R³,
R^{4'} est un atome d'hydrogène ou, indépendamment de R^{3'}, a les significations de R^{3'},
B) au moins un solvant dans lequel le composant A) est soluble, et éventuellement
C) au moins une substance tensioactive,
en tant qu'agent de contrôle de fissures, pour détecter les fissures superficielles ou d'autres défauts dans des pièces en oeuvre devant faire l'objet d'un contrôle de ce type.

2. Utilisation de compositions selon la revendication 1 dans lesquelles R¹, dans les composés bisazoïques ayant les formules Ia, est un groupe alkyle en C₁-C₄, et R², dans les composés bisazoïques ayant les formules Ib, est un groupe alkyle en C₂-C₄.

3. Utilisation de compositions selon la revendication 1 ou 2, dans lesquelles le composant A) est constitué d'au moins un composé bisazoïque de formule Ia.

4. Utilisation de compositions selon les revendications 1 à 3, dans lesquelles le composant C) éventuellement présent est constitué d'au moins une substance tensioactive non ionique ou anionique.

5. Compositions contenant en tant que composants
A) au moins un composé bisazaïque choisi dans l'ensemble comprenant les composés ayant les formules Ia et Ib selon la revendication 1,
B) au moins un solvant dans lequel le composant A) est soluble, et
C) au moins une substance tensioactive.

6. Compositions selon la revendication 6, dans lesquelles R¹, dans les composés bisazoiques de formule Ia, est un groupe alkyle en C₁-C₄, et R², dans les composés bisazoïques ayant les formules Ib, est un groupe alkyle en C₂-C₄.

7. Compositions selon la revendication 5 ou 6, dans lesquelles le composant A) est constitué d'au moins un composé bisazoïque de formule Ia.

8. Compositions selon les revendications 5 à 7, dans lesquelles le composant C) est constitué d'au moins une substance tensioactive non ionique ou anionique.

9. Compositions selon les revendications 5 à 7, dans lesquelles le composant C) est constitué du produit d'alcoxylation ou d'un mélange de produits d'alcoxylation de composés hydroxylés, aminés ou aminohydroxylés, aliphatiques ou alkylaromatiques.

10. Compositions selon les revendications 5 à 7, dans lesquelles le composant C) est constitué d'un polyalkylèneglycol, d'un éther alkylique de polyalkylèneglycol ou d'un mélange de polyalkylèneglycols et/ou d'éthers alkyliques de polyalkylèneglycol, les uns aux autres ou les uns avec les autres.
